# EUROPEAN PATENT APPLICATION

(11) **EP 4 760 612 A1**
(43) Date of publication of application: **17.06.2026**
(21) Application number: 25221322.8
(22) Date of filing: 08.12.2025
(51) Int. Cl.: G06Q 10/047, G06Q 30/0645, G06Q 50/40, G06Q 50/43

(54) **VEHICLE MANAGEMENT DEVICE**

(30) Priority: 13.12.2024 JP 2024218687
(71) Applicant: Toyota Jidosha Kabushiki Kaisha, Toyota-shi, Aichi-ken 471-8571 (JP)
(72) Inventor: YAMAMURA, Reina, TOYOTA-SHI, AICHI-KEN, 471-8571 (JP); TAKEISHI, Hiroki, TOYOTA-SHI, AICHI-KEN, 471-8571 (JP)
(74) Representative: Cabinet Beau de Loménie

(57) **Abstract**

In a vehicle management device, a processor acquires position information of a lent or shared vehicle and destination information set in a car navigation system of the vehicle, and determines whether the vehicle can be returned by predetermined time on the basis of the position information of the vehicle, position information of a return station where the vehicle is returned, and the destination information.

## Description

### 1. Field of the Invention

The present disclosure relates to a vehicle management device.

### 2. Description of the Related Art

As article or service reservation management systems, there are systems that manage reservation information of an article or a right of use of a service on the basis of reservation information from a user or the like. Such systems provide a mechanism to ensure return by taking measures such as prompting return on the basis of information of reservation time and current time.

In addition, among such systems, there is a system that manages reservation information of a vehicle rental, and the system includes what notifies an excess of reservation time or gives a penalty for the excess in order to cause a user to reliably return the vehicle on the basis of the reservation information. In addition, for example, Patent Document 1 discloses a system that extends reservation time within a range that does not affect a subsequent reservation in a case where the reservation time of the vehicle is exceeded.

### PRIOR-ART DOCUMENT

### PATENT DOCUMENT

Patent Document 1: Japanese Laid-open Patent Publication No. 2014-137766

### SUMMARY OF THE INVENTION

### PROBLEM TO BE SOLVED BY THE INVENTION

However, in a conventional vehicle reservation management system, since it takes time to determine whether a vehicle can be returned, there is a risk that various problems are generated in lending (car rental), sharing (car sharing), and the like of the vehicle.

For example, depending on a positional relationship between a current position of the vehicle and a return destination, there is a possibility that reservation time is greatly exceeded and the subsequent reservation use is hindered. In addition, in a case where there is no intention to return the vehicle, such as a case of theft, there is a possibility that taking measures to protect asset (vehicle) is too late when the measures are taken after the return time is exceeded.

The reason why it is difficult to ensure the return of the vehicle is due to a characteristic that a purpose of use of the vehicle that is an object of the lending management is to move at a high speed over a long distance unlike an article that can be immediately returned. Thus, in order to determine whether the vehicle can be returned, information including a position of the vehicle may be requested in addition to a relationship between reservation time and current time. For example, in a case where a distance from the vehicle to a return station is large, even when there is sufficient time until reservation end time (scheduled return time), there is a possibility that the return within the reservation time will be impossible.

The present disclosure has been made in view of the above, and an object thereof is to provide a vehicle management device that can reduce a risk that a vehicle is not returned by determining whether the lent or shared vehicle can be returned.

A vehicle management device according to the present disclosure includes: a processor that acquires position information of a lent or shared vehicle, and destination information set in a car navigation system of the vehicle, and determines whether the vehicle can be returned by predetermined time on a basis of the position information of the vehicle, position information of a return station where the vehicle is returned, and the destination information.

A vehicle management device according to the present disclosure includes:
a processor that
acquires position information of a lent or shared vehicle, and
determines whether the vehicle can be returned by predetermined time on a basis of at least the position information of the vehicle and reservation information of the vehicle.

### EFFECT OF THE INVENTION

According to the present disclosure, it is possible to reduce a risk that a vehicle is not returned by determining whether the lent or shared vehicle can be returned.

### BRIEF DESCRIPTION OF THE DRAWINGS

FIG. 1 is a block diagram illustrating a schematic configuration of a vehicle management system including a vehicle management device according to an embodiment;
FIGS. 2A and 2B are views illustrating an example of reservation information held by a vehicle management DB of a vehicle management server in the vehicle management system including the vehicle management device according to the embodiment, FIG. 2A illustrating an example of the reservation information at the time of normal use, and FIG. 2B illustrating an example of the reservation information at the time of one-way use;
FIG. 3 is a view illustrating an example of station information held by a station management DB of the vehicle management server in the vehicle management system including the vehicle management device according to the embodiment;
FIGS. 4A and 4B are views illustrating an example of vehicle information held by the vehicle management DB of the vehicle management server in the vehicle management system including the vehicle management device according to the embodiment, FIG. 4A illustrating an example of normal vehicle information, and FIG. 4B illustrating an example of vehicle information including destination information of a car navigation system;
FIG. 5 is a flowchart illustrating an example of a flow of processing in the vehicle management server functioning as the vehicle management device according to the embodiment;
FIG. 6 is a sequence diagram illustrating an example of information exchange using asynchronous communication among the vehicle management server, a vehicle information server, and a vehicle in the vehicle management system including the vehicle management device according to the embodiment; and
FIG. 7 is a sequence diagram illustrating an example of information exchange using synchronous communication and asynchronous communication among the vehicle management server, the vehicle information server, and the vehicle in the vehicle management system including the vehicle management device according to the embodiment.

### DETAILED DESCRIPTION OF THE PREFERRED EMBODIMENTS

A vehicle management device according to an embodiment of the present disclosure will be described with reference to the drawings. Note that components in the following embodiment include what can be easily replaced by those skilled in the art or what is substantially the same.

### (Vehicle management system)

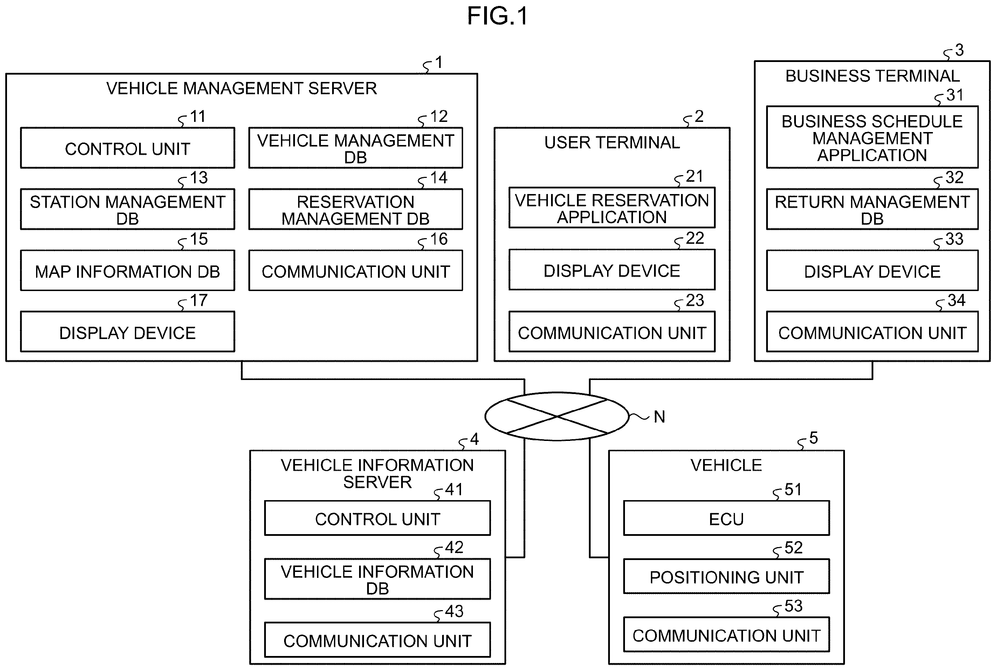

A vehicle management system according to the embodiment will be described with reference to FIG. 1. As illustrated in FIG. 1, the vehicle management system includes a vehicle management server 1, a user terminal 2, a business terminal 3, a vehicle information server 4, and a vehicle 5. In the vehicle management system, the vehicle management server 1 functions as a vehicle management device.

The vehicle management server 1, the user terminal 2, the business terminal 3, the vehicle information server 4, and the vehicle 5 all have a communication function, and are configured to be able to communicate with each other through a network N and exchange various kinds of information. This network N includes a public line network such as an Internet network, a mobile phone network, or the like. Note that as a specific configuration of the network N that connects the vehicle management server 1, the user terminal 2, the business terminal 3, the vehicle information server 4, and the vehicle 5, for example, the following is assumed.
(1) The vehicle management server 1, the user terminal 2, the business terminal 3, the vehicle information server 4, and the vehicle 5 are connected by the public line network (such as the mobile phone network). In this case, asynchronous communication is performed among the vehicle management server 1, the user terminal 2, the business terminal 3, the vehicle information server 4, and the vehicle 5.
(2) The vehicle management server 1, the user terminal 2, and the business terminal 3 are connected by a wide area network (WAN), and the vehicle information server 4 and the vehicle 5 are connected by the public line network (such as the mobile phone network). In this case, asynchronous communication is performed between the vehicle information server 4 and the vehicle 5, and synchronous communication is performed between the others.

### (Vehicle management server)

The vehicle management server 1 manages the vehicle 5 for a use of lending or sharing the vehicle 5 within a certain period of time, for example, for a car rental, car sharing, or the like. In the present embodiment, a person who uses the car rental or car sharing is referred to as a "user". In addition, in the present embodiment, a person (company) that provides a car rental service (lending operation) or car sharing (sharing operation) is referred to as a "business manager". Note that as described later, in the present embodiment, not only the user but also the business manager may use the vehicle 5 for a purpose of business.

In addition, the vehicle 5 may be a vehicle for which a corporation (corporation business operator) has a fleet contract (hereinafter referred to as "corporate fleet vehicle"). In this case, the business manager is a corporation, and the user is an employee belonging to the corporation.

As illustrated in FIG. 1, the vehicle management server 1 includes a control unit 11, a vehicle management DB 12, a station management DB 13, a reservation management DB 14, a map information DB 15, and a communication unit 16. In addition to the above configuration, the vehicle management server 1 may further include a display device 17 as necessary.

The control unit 11 is realized by, for example, a processor including a central processing unit (CPU) and the like, and a memory (main storage unit) including a random access memory (RAM), a read only memory (ROM), and the like. For example, in a case where the user uses the lent or shared vehicle 5, the control unit 11 determines whether the vehicle 5 is returned by reservation end time, and a predetermined response (such as alert notification or the like) is performed in a case where it is determined that the return is not possible.

Specifically, the control unit 11 acquires position information of the lent or shared vehicle (hereinafter, also referred to as "vehicle position information") from the vehicle information server 4. Then, the vehicle position information includes, for example, information related to a current position of the vehicle 5 and information related to acquisition time of the information. Subsequently, the control unit 11 determines whether the vehicle 5 can be returned by predetermined time on the basis of at least the vehicle position information and the reservation information of the vehicle 5.

The "reservation information of the vehicle 5" is information related to a reservation of when a contract for lending or sharing of the vehicle 5 is made, and is stored in the reservation management DB 14 for each vehicle 5. For example, the control unit 11 creates the reservation information on the basis of information received through a vehicle reservation application 21 of the user terminal 2, and stores the reservation information in the reservation management DB 14. The vehicle reservation application 21 is an application used when the user reserves rental or sharing of the vehicle 5. In addition, the control unit 11 may create the reservation information on the basis of information received through a business schedule management application 31 of the business terminal 3, and stores the reservation information in the reservation management DB 14. The business schedule management application 31 is an application used when the business manager uses the vehicle 5 on business.

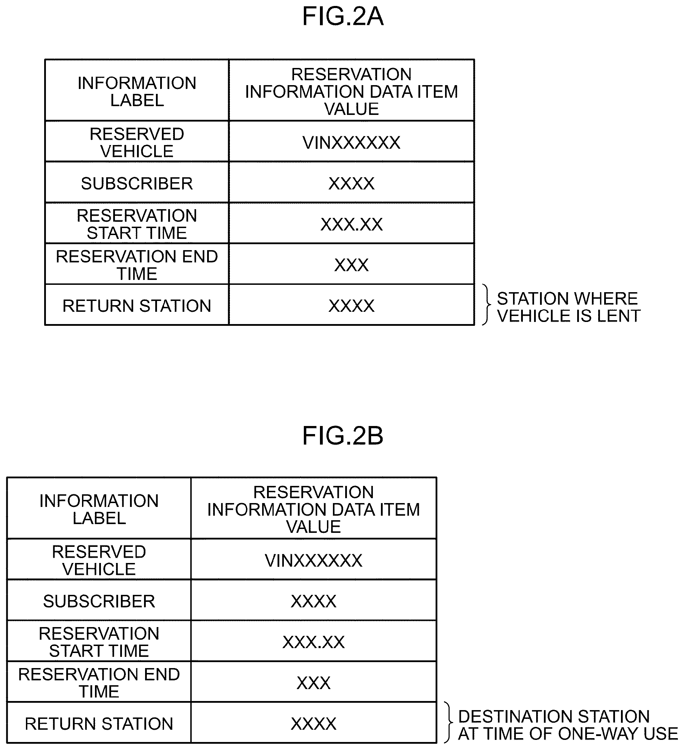

For example, as illustrated in FIG. 2A, the reservation information includes information for specifying a reserved vehicle (such as a vehicle identification number (VIN number) or the like), information related to a subscriber (name, ID, and the like of the user), reservation start time, and reservation end time. In addition, the reservation information includes position information of a return station where lending and borrowing of the vehicle 5 is performed, for example, as illustrated in of FIG. 2A. The "predetermined time" is, for example, the reservation end time included in the reservation information of the vehicle 5.

The reservation information may include information related to a plurality of reservations for the same vehicle 5. In this case, for example, the reservation information includes information related to the subscriber, the reservation start time, the reservation end time, and the return station related to a first reservation and information related to the subscriber, the reservation start time, the reservation end time, and the return station related to a second reservation for the vehicle 5. The "second reservation" indicates a next reservation of the first reservation (such as a reservation subsequent to the first reservation). Furthermore, in a case where there is a third reservation after the second reservation, the reservation information may include reservation information related to the third reservation.

In addition, in the operation of lending or sharing the vehicle 5, for example, there is a case where the user who has finished using the vehicle 5 returns the vehicle 5 to a station different from a station where the vehicle 5 is lent, and such a use method is referred to as "one-way use". For example, as illustrated in FIG. 2B, the reservation information in the one-way use includes information for specifying the return station (such as a name of the return station) in addition to the information related to the reserved vehicle, the information related to the subscriber, the reservation start time, and the reservation end time.

When determining whether the vehicle 5 can be returned by the predetermined time, the control unit 11 may display a result of the determination on the display device 17. In this case, the control unit 11 generates a video signal indicating information related to the determination result of whether the return is possible, and outputs the video signal to the display device 17. In response to this, the display device 17 displays the information related to the determination result of whether the return is possible on the basis of the input video signal.

In such a manner, the vehicle management server 1 can reduce the risk that the vehicle 5 is not returned by determining whether the vehicle 5 can be returned on the basis of the current position and the reservation information of the lent or shared vehicle 5.

The control unit 11 may determine whether the vehicle 5 can be returned by the predetermined time on the basis of the position information of the return station where the vehicle 5 is returned in addition to the vehicle position information. That is, the control unit 11 determines whether the vehicle 5 can be returned by the predetermined time on the basis of a distance from the current position of the vehicle 5 to the position of the return station. In this case, the position information of the return station is included in the reservation information or specified on the basis of the reservation information and the station information. Note that the "station information" indicates information related to stations and stored in the station management DB 13.

A case where "the position information of the return station is included in the reservation information" is assumed to be, for example, a case where the user borrows and returns the vehicle 5 at the same station. In this case, the reservation information includes position information of the return station where lending and borrowing of the vehicle 5 is performed as illustrated in FIG. 2A. Thus, the control unit 11 acquires the vehicle position information from the vehicle information server 4 and the position information of the return station from the reservation management DB 14, and determines whether the vehicle 5 can be returned by the predetermined time. The "predetermined time" here is the reservation end time of the vehicle 5.

On the other hand, a case where "the position information of the return station is specified on the basis of the reservation information" is assumed to be, for example, a case where the user borrows and returns the vehicle 5 at different stations. In this case, as illustrated in FIG. 2B, the reservation information includes information for specifying the return station where the vehicle 5 is returned. Thus, the control unit 11 acquires the vehicle position information from the vehicle information server 4 and acquires the information for specifying the return station from the reservation management DB 14.

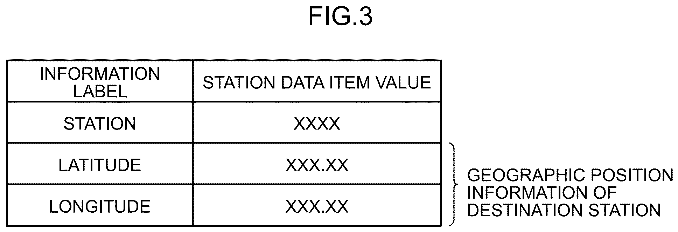

Subsequently, the control unit 11 refers to the station information stored in the station management DB 13, and specifies the position of the return station on the basis of the information for specifying the return station. Note that, for example, as illustrated in FIG. 3, the station information includes information for specifying the station (such as a name of the station), latitude and longitude indicating a position of the station, and the like. Then, the control unit 11 calculates required time from the current position of the vehicle 5 to the return station on the basis of the vehicle position information and the specified position of the return station. Subsequently, the control unit 11 determines whether the vehicle 5 can be returned by the predetermined time on the basis of the required time and the current time. The "predetermined time" here is the reservation end time of the vehicle 5.

In such a manner, the vehicle management server 1 can reduce the risk that the vehicle 5 is not returned by determining whether the vehicle 5 can be returned on the basis of the current position of the lent or shared vehicle 5 and the position of the return station.

For example, in a case where lending or sharing of the same vehicle 5 is continuously reserved, the control unit 11 may determine whether the vehicle 5 can be returned in consideration of the next reservation. In this case, the control unit 11 acquires the vehicle position information from the vehicle information server 4. Furthermore, the control unit 11 acquires the position information of the return station from the reservation information (see FIG. 2A), or specifies the position information of the return station from the reservation information (see FIG. 2B) and the station information (see FIG. 3).

Subsequently, the control unit 11 calculates required time from the current position of the vehicle 5 to the return station on the basis of the vehicle position information and the position information of the return station. Subsequently, the control unit 11 acquires, from the reservation management DB 14, reservation information of the reservation (second reservation) subsequent to the current reservation (first reservation). Subsequently, the control unit 11 determines whether the vehicle 5 can be returned by the predetermined time on the basis of the required time, the current time, and reservation start time of the second reservation. Note that the "predetermined time" here is the reservation start time of the vehicle 5 in the next reservation (second reservation).

In such a manner, the vehicle management server 1 calculates the required time from the current position of the lent or shared vehicle 5 to the return station, and determines whether the vehicle 5 can be returned on the basis of the required time and the next reservation start time. As a result, the risk that the vehicle 5 is not returned can be further reduced.

The control unit 11 may periodically acquire the vehicle position information and determine whether the vehicle 5 can be returned, for example, on the basis of elapsed time with respect to a reservation period from the reservation start time to the reservation end time of the vehicle 5. In this case, the control unit 11 determines timing (hereinafter, referred to as "determination timing") at which the vehicle position information is acquired and determination whether the vehicle 5 can be returned is made, for example, by using at least one of the current time, the reservation end time of the current reservation (first reservation), or the reservation start time of the next reservation (second reservation). The control unit 11 can determine the determination timing as follows, for example.
(1) Time that is a half of the reservation time of the current reservation and time that is 3/4 thereof are set as determination timing. For example, in a case of the reservation start time (current): 12:00 and the reservation end time (current): 13:00, "12:30" and "12:45" are set as the determination timing.
(2) A difference between the current time and the reservation start time of the next reservation is calculated, and a half time and 3/4 time thereof are set as the determination timing. For example, in a case of the current time: 12:00 and the reservation start time (next): 14:00, "13:00" and "13:30" are set as the determination timing.
(3) Time in every predetermined time from the reservation start time of the current reservation is set as the determination timing. For example, in a case of the reservation start time (current): 12:00 and the predetermined time: 30 minutes, "12:30", "13:00",... are set as the determination timing.
(4) Time after the predetermined time from the reservation start time of the current reservation is set as the determination timing.

In such a manner, the vehicle management server 1 can further reduce the risk that the vehicle 5 is not returned by acquiring the vehicle position information and determining whether the vehicle 5 can be returned at predetermined timing.

The control unit 11 may determine whether the vehicle 5 can be returned in consideration of the required time from the current position of the vehicle 5 to the return station. In this case, the control unit 11 acquires the vehicle position information and the information related to the speed of the vehicle 5 (vehicle speed) from the vehicle information server 4. Furthermore, the control unit 11 acquires the position information of the return station from the reservation information (see FIG. 2A), or specifies the position information of the return station from the reservation information (see FIG. 2B) and the station information (see FIG. 3).

Then, the control unit 11 calculates the distance from the current position of the vehicle 5 to the position of the return station on the basis of the vehicle position information and the position information of the return station. Then, the control unit 11 calculates the required time from the current position of the vehicle 5 to the return station on the basis of the distance and the speed of the vehicle 5. Subsequently, the control unit 11 determines whether the vehicle 5 can be returned by the predetermined time on the basis of the required time, the current time, and the reservation information (such as the reservation end time of the current reservation and the reservation start time of the next reservation). Note that in a case where it is determined whether the vehicle 5 can be returned in consideration of only the current reservation end time, the "predetermined time" here is the reservation end time of the vehicle 5 at this time (first reservation). On the other hand, in a case where it is determined whether the vehicle 5 can be returned in consideration of the next reservation start time, the "predetermined time" here is the reservation start time of the vehicle 5 of the next (second reservation).

In such a manner, the vehicle management server 1 calculates the required time to the return station on the basis of the distance from the current position of the lent or shared vehicle 5 to the return station and the speed of the vehicle 5, and determines whether the vehicle 5 can be returned on the basis of the required time and the reservation information. As a result, the risk that the vehicle 5 is not returned can be further reduced.

The control unit 11 may determine whether the vehicle 5 can be returned in consideration of required time based on a Euclidean distance from the current position of the vehicle 5 to the return station. In this case, the control unit 11 acquires the vehicle position information from the vehicle information server 4. Furthermore, the control unit 11 acquires the position information of the return station from the reservation information (see FIG. 2A), or specifies the position information of the return station from the reservation information (see FIG. 2B) and the station information (see FIG. 3).

Then, the control unit 11 calculates the Euclidean distance from the current position of the vehicle 5 to the return station on the basis of latitude/longitude information indicating the position of the vehicle 5 which information is included in the vehicle position information and latitude/longitude information indicating the position of the return station of the vehicle 5. Then, the control unit 11 calculates the required time from the current position of the vehicle 5 to the return station on the basis of the Euclidean distance and the speed of the vehicle 5. Subsequently, the control unit 11 determines whether the vehicle 5 can be returned by the predetermined time on the basis of the required time, the current time, and the reservation information (such as the reservation end time of the current reservation and the reservation start time of the next reservation). Note that in a case where it is determined whether the vehicle 5 can be returned in consideration of only the current reservation end time, the "predetermined time" here is the reservation end time of the vehicle 5 at this time (first reservation). On the other hand, in a case where it is determined whether the vehicle 5 can be returned in consideration of the next reservation start time, the "predetermined time" here is the reservation start time of the vehicle 5 of the next (second reservation).

In such a manner, the vehicle management server 1 calculates the required time to the return station on the basis of the Euclidean distance from the current position of the lent or shared vehicle 5 to the return station and the speed of the vehicle 5, and determines whether the vehicle 5 can be returned on the basis of the required time and the reservation information. As a result, the risk that the vehicle 5 is not returned can be further reduced.

The control unit 11 may determine whether the vehicle 5 can be returned in consideration of required time based on road information. In this case, the control unit 11 acquires the vehicle position information from the vehicle information server 4. Furthermore, the control unit 11 acquires the position information of the return station from the reservation information (see FIG. 2A), or specifies the position information of the return station from the reservation information (see FIG. 2B) and the station information (see FIG. 3). In addition, the control unit 11 acquires the road information from the map information DB 15.

The road information is, for example, map information used in a car navigation system (car navigation system), and includes information related to a road and information related to traveling time of the vehicle 5 on the road. In addition, the traveling time of the vehicle 5 is information related to traveling time between nodes (such as intersections and the like) in a case of a speed on a general road: 30 km/h and a speed on a highway: 80 km/h, for example. Furthermore, the control unit 11 may acquire congestion information or the like from VICS (registered trademark) or the like as the road information.

Subsequently, the control unit 11 calculates the required time from the current position of the vehicle 5 to the return station on the basis of the vehicle position information, the position information of the return station, and the road information. Then, the control unit 11 determines whether the vehicle 5 can be returned by the predetermined time on the basis of the required time, the current time, and the reservation information (such as the reservation end time of the current reservation and the reservation start time of the next reservation). Note that in a case where it is determined whether the vehicle 5 can be returned in consideration of only the current reservation end time, the "predetermined time" here is the reservation end time of the vehicle 5 at this time (first reservation). On the other hand, in a case where it is determined whether the vehicle 5 can be returned in consideration of the next reservation start time, the "predetermined time" here is the reservation start time of the vehicle 5 of the next (second reservation).

In such a manner, the vehicle management server 1 calculates the required time to the return station on the basis of the current position of the lent or shared vehicle 5, the position of the return station, and the road information, and determines whether the vehicle 5 can be returned on the basis of the required time and the reservation information. As a result, the risk that the vehicle 5 is not returned can be further reduced.

The control unit 11 may determine whether the vehicle 5 can be returned in consideration of required time based on a destination of the vehicle 5. In this case, the control unit 11 acquires the vehicle position information and destination information of the vehicle 5 from the vehicle information server 4. Furthermore, the control unit 11 acquires the position information of the return station from the reservation information (see FIG. 2A), or specifies the position information of the return station from the reservation information (see FIG. 2B) and the station information (see FIG. 3).

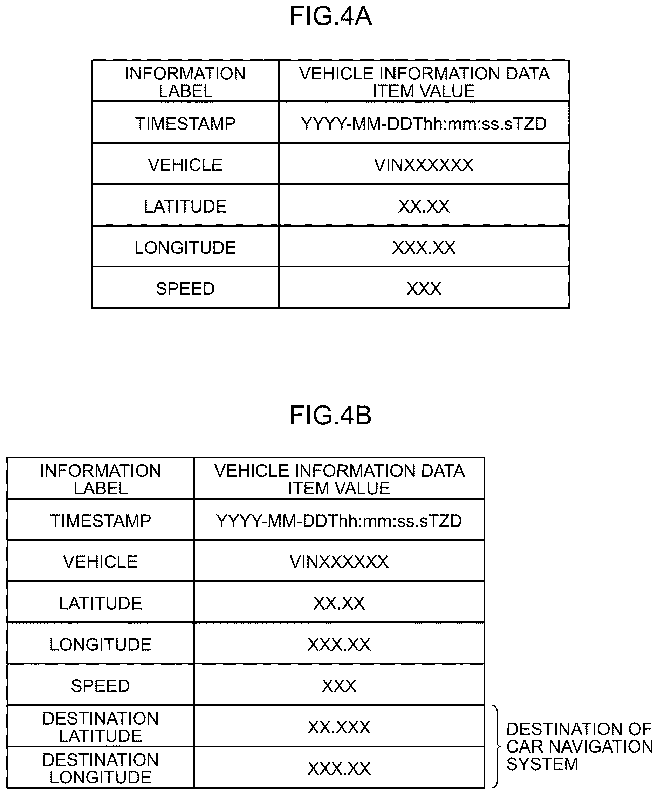

The "destination information" is, for example, information related to latitude and longitude of the destination of the lent or shared vehicle 5 (see FIG. 4B). The destination information is, for example, information set in a car navigation system of the vehicle 5. This destination information is transmitted from the vehicle 5 to the vehicle information server 4 and stored in a vehicle information DB 42, for example, when the destination of the vehicle 5 is set in the car navigation system. The destination information may be input from the user via the vehicle reservation application 21. For example, in a case where the vehicle 5 is used on business, the destination information may be input from the business manager via the business schedule management application 31.

Subsequently, the control unit 11 determines whether the vehicle can be returned by the predetermined time on the basis of the vehicle position information, the position information of the return station, and the destination information. That is, the control unit 11 calculates the required time from the current position of the vehicle 5 to the return station on the basis of the vehicle position information, the position information of the return station, and the destination information. Subsequently, the control unit 11 determines whether the vehicle 5 can be returned by the predetermined time on the basis of the required time, the current time, and the reservation information (such as the reservation end time of the current reservation and the reservation start time of the next reservation). Note that in a case where it is determined whether the vehicle 5 can be returned in consideration of only the current reservation end time, the "predetermined time" here is the reservation end time of the vehicle 5 at this time (first reservation). On the other hand, in a case where it is determined whether the vehicle 5 can be returned in consideration of the next reservation start time, the "predetermined time" here is the reservation start time of the vehicle 5 of the next (second reservation).

In such a manner, the vehicle management server 1 calculates the required time to the return station on the basis of the current position of the lent or shared vehicle 5, the position of the return station, and the destination information, and determines whether the vehicle 5 can be returned on the basis of the required time and the reservation information. As a result, the risk that the vehicle 5 is not returned can be further reduced.

When determining whether the vehicle 5 can be returned by the predetermined time, the control unit 11 may output information related to a result of the determination whether the vehicle 5 can be returned to the business terminal 3 owned by the business manager that performs lending operation or sharing operation of the vehicle 5, and display the information related to the result of the determination whether the return is possible on the display device 33. In this case, the control unit 11 generates a video signal indicating the information related to the result of the determination whether the return is possible, and outputs the video signal to the display device 33. In response to this, the display device 33 displays the information related to the result of the determination whether the return is possible on the basis of the input video signal. Note that when determining whether the vehicle 5 can be returned by the predetermined time, the control unit 11 may output the information related to the result of the determination whether the vehicle 5 can be returned to the business terminal 3 through an e-mail, message notification, or the like.

In such a manner, the vehicle management server 1 displays the result of the determination whether the vehicle 5 can be returned on the display device 33, and presents the result to the business manager. As a result, since the business manager can quickly take a measure for the return of the vehicle 5, the risk that the vehicle 5 is not returned can be further reduced.

When determining whether the vehicle 5 can be returned by the predetermined time, the control unit 11 may output the information related to the result of the determination whether the vehicle 5 can be returned to the user terminal 2 owned by the user, and display the information related to the result of the determination whether the return is possible on the display device 22. In this case, the control unit 11 generates a video signal indicating the information related to the result of the determination whether the return is possible, and outputs the video signal to the display device 22. In response to this, the display device 22 displays the information related to the result of the determination whether the return is possible on the basis of the input video signal. Note that when determining whether the vehicle 5 can be returned by the predetermined time, the control unit 11 may output the information related to the result of the determination whether the vehicle 5 can be returned to the user terminal 2 through an e-mail, message notification, or the like.

In such a manner, the vehicle management server 1 displays the result of the determination whether the vehicle 5 can be returned on the display device 22, and presents the result to the user. As a result, since it is possible to prompt the user to return the vehicle 5 currently used, it is possible to further reduce the risk that the vehicle 5 is not returned.

The vehicle management DB 12 stores the information related to the vehicle 5 (hereinafter, referred to as "vehicle information"). For example, as illustrated in FIG. 4A, the vehicle information includes a timestamp indicating acquisition time of data, information to specify the vehicle 5 (such as a vehicle identification number (VIN number)), latitude and longitude indicating a position of the vehicle 5, a speed of the vehicle 5 (vehicle speed), and the like. In addition, for example, as illustrated in FIG. 4B, the vehicle information may include information that is related to latitude and longitude of a destination and that is set in the car navigation system of the vehicle 5 in addition to the timestamp, the information to specify the vehicle 5, the latitude and longitude indicating the position of the vehicle 5, and the speed of the vehicle 5.

The station management DB 13 stores the station information in a manner illustrated in FIG. 3. The reservation management DB 14 stores the reservation information of the vehicle 5 in a manner illustrated in FIG. 2. The map information DB 15 stores the road information.

The communication unit 16 includes, for example, a WAN interface board, a local area network (LAN) interface board, a wireless communication circuit for wireless communication, and the like. The communication unit 16 exchanges information with, for example, the user terminal 2, the business terminal 3, and the vehicle information server 4 by communication through the network N.

The display device 17 is realized by, for example, a liquid crystal display (LCD), an organic EL display (OLED), or the like. When the control unit 11 determines whether the vehicle 5 can be returned by the predetermined time, the video signal indicating the information related to the result of the determination is input from the control unit 11 to the display device 17 as necessary. In response to this, the display device 17 displays the information related to the result of the determination whether the return is possible on the basis of the input video signal.

### (User terminal)

The user terminal 2 is an information processing terminal owned by the user, and is realized by, for example, a personal computer, a smartphone, a tablet terminal, or the like. As illustrated in FIG. 1, the user terminal 2 includes the vehicle reservation application 21, a display device 22, and a communication unit 23.

The vehicle reservation application 21 is an application used when the user reserves rental or sharing of the vehicle 5. When acquiring the information necessary for the reservation of the vehicle 5 from the user through, for example, an input device, the vehicle reservation application 21 transmits the information to the vehicle management server 1. In response to this, the control unit 11 creates the reservation information (see FIG. 2) and stores the reservation information in the reservation management DB 14.

The display device 22 is realized by, for example, a liquid crystal display (LCD), an organic EL display (OLED), or the like. When the control unit 11 determines whether the vehicle 5 can be returned by the predetermined time, the video signal indicating the information related to the result of the determination is input from the control unit 11 to the display device 22 as necessary. In response to this, the display device 22 displays the information related to the result of the determination whether the return is possible on the basis of the input video signal.

The communication unit 23 includes, for example, a WAN interface board, a local area network (LAN) interface board, a wireless communication circuit for wireless communication, and the like. The communication unit 23 exchanges information with the vehicle management server 1 by the communication through the network N, for example.

### (Business Terminal)

The business terminal 3 is an information processing terminal owned by the business manager, and is realized by, for example, a personal computer, a smartphone, a tablet terminal, or the like. As illustrated in FIG. 1, the business terminal 3 includes the business schedule management application 31, a return management DB 32, a display device 33, and a communication unit 34.

The business schedule management application 31 is an application used when the business manager uses the vehicle 5 on business. When acquiring information necessary for the reservation of the vehicle 5 from the business manager through, for example, the input device, the business schedule management application 31 transmits the information to the vehicle management server 1. In response to this, the control unit 11 creates the reservation information (see FIG. 2) and stores the reservation information in the reservation management DB 14. The return management DB 32 stores various kinds of information related to the vehicle 5 the lending operation or the sharing operation of which is performed.

The display device 33 is realized by, for example, a liquid crystal display (LCD), an organic EL display (OLED), or the like. When the control unit 11 determines whether the vehicle 5 can be returned by the predetermined time, the video signal indicating the information related to the result of the determination is input from the control unit 11 to the display device 33 as necessary. In response to this, the display device 33 displays the information related to the result of the determination whether the return is possible on the basis of the input video signal.

The communication unit 34 includes, for example, a WAN interface board, a local area network (LAN) interface board, a wireless communication circuit for wireless communication, and the like. The communication unit 34 exchange information with the vehicle management server 1 by the communication through the network N, for example.

### (Vehicle information server)

The vehicle information server 4 includes a control unit 41, the vehicle information DB 42, and a communication unit 43.

The control unit 41 is realized by, for example, a processor including a CPU and the like, and a memory (main storage unit) including a RAM, a ROM, and the like. The control unit 41 updates the vehicle information in the vehicle information DB 42 in response to a request from the vehicle management server 1.

The vehicle information DB 42 acquires and updates the vehicle information from the vehicle 5 in a constant period in accordance with the request from the vehicle management server 1. In addition, at the time of processing of determining whether the vehicle 5 can be returned, the vehicle information DB 42 acquires the latest vehicle information from the vehicle 5 and transmits the latest vehicle information to the vehicle management server 1 in accordance with the request from the vehicle management server 1.

The communication unit 43 includes, for example, a WAN interface board, a local area network (LAN) interface board, a wireless communication circuit for wireless communication, and the like. The communication unit 43 exchanges information with the vehicle management server 1 and the vehicle 5 by the communication through the network N, for example.

### (Vehicle)

The vehicle 5 is a vehicle that is a target of the lending operation or the sharing operation performed by the business manager for the user. A specific configuration of the vehicle 5 is not specifically limited. The vehicle 5 may be, for example, a general engine vehicle (conventional vehicle), a hybrid electric vehicle (HEV), a plug-in hybrid electric vehicle (PHEV), or the like. In addition, the vehicle 5 may be, for example, a fuel cell electric vehicle (FCEV), a battery electric vehicle (BEV), or the like.

As illustrated in FIG. 1, the vehicle 5 includes an ECU 51, a positioning unit 52, and a communication unit 53.

The ECU 51 is an electronic control unit including, as a main component, a microcomputer including a CPU, a ROM, a RAM, and the like, for example. The ECU 51 transmits the vehicle information to the vehicle information server 4 in accordance with a request from the vehicle information server 4.

For example, the positioning unit 52 receives a radio wave from a global positioning system (GPS) satellite and detects a current position of the vehicle 5. Specifically, on the basis of time when radio waves are transmitted from a plurality of the GPS satellites and time when the positioning unit 52 receives the radio waves, the positioning unit 52 calculates a distance between each of the GPS satellites and the vehicle 5, and calculates the current position of the vehicle 5 on the basis of the distance. Note that a method of detecting the current position of the vehicle 5 by the positioning unit 52 is not limited to a method using the GPS satellites, and the current position of the vehicle 5 may be detected by combination of Light Detection and Ranging or Laser Imaging Detection and Ranging (LiDAR) and a 3D map, for example.

The communication unit 53 includes, for example, a data communication module (DCM) or the like. The communication unit 53 exchanges information with the vehicle information server 4 by the communication through the network N.

### (Processing in the vehicle management server)

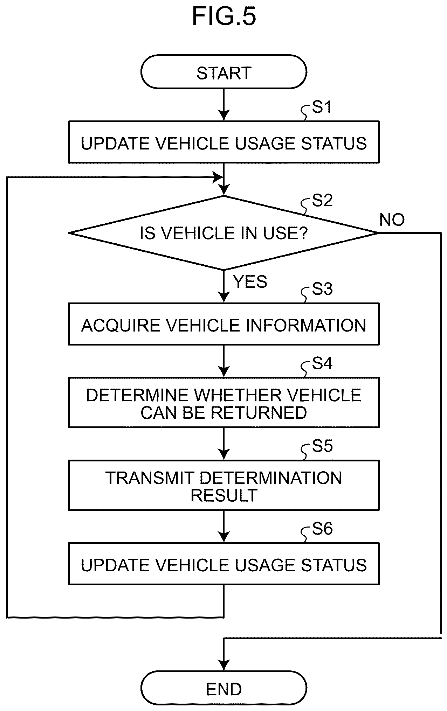

An example of a flow of processing in the vehicle management server 1 will be described with reference to FIG. 5. Prior to the processing of FIG. 5, the control unit 11 of the vehicle management server 1 creates the reservation information (see FIG. 2) on the basis of the information input from the user terminal 2, and stores the reservation information in the reservation management DB 14. Then, the following processing is performed after such reservation reception.

First, the control unit 11 updates a vehicle usage status (Step S1). The "update of the vehicle usage status" indicates processing of switching the usage status of the vehicle 5 to either "in use" or "returned". The processing in Step S1 is performed on the basis of, for example, operation of the vehicle reservation application 21 of the user terminal 2 (such as a case where the user presses a "use start button" on the application). The processing in Step S1 may be performed in a case where the current time passes the reservation start time of vehicle 5.

Subsequently, the control unit 11 determines whether the vehicle 5 is in use (Step S2). In a case where the vehicle 5 is in use (Yes in Step S2), the control unit 11 acquires the vehicle information from the vehicle information server 4 (Step S3).

Subsequently, the control unit 11 determines whether the vehicle 5 can be returned (Step S4). In Step S4, the control unit 11 determines whether the vehicle 5 is returned by the reservation end time on the basis of at least the vehicle position information included in the vehicle information and the reservation end time included in the reservation information. Subsequently, the control unit 11 transmits a result of the determination whether the vehicle 5 can be returned to the business terminal 3, for example (Step S5). Note that the business terminal 3 may display the received result of the determination on the display device 33.

Subsequently, the control unit 11 updates the vehicle usage status (Step S6), and returns to the processing of Step S2. Note that in Step S2, in a case where the vehicle 5 is not in use (is returned) (No in Step S2), the control unit 11 completes the present processing.

### (Exchange of information among the vehicle management server, the vehicle information server, and the vehicle (first example))

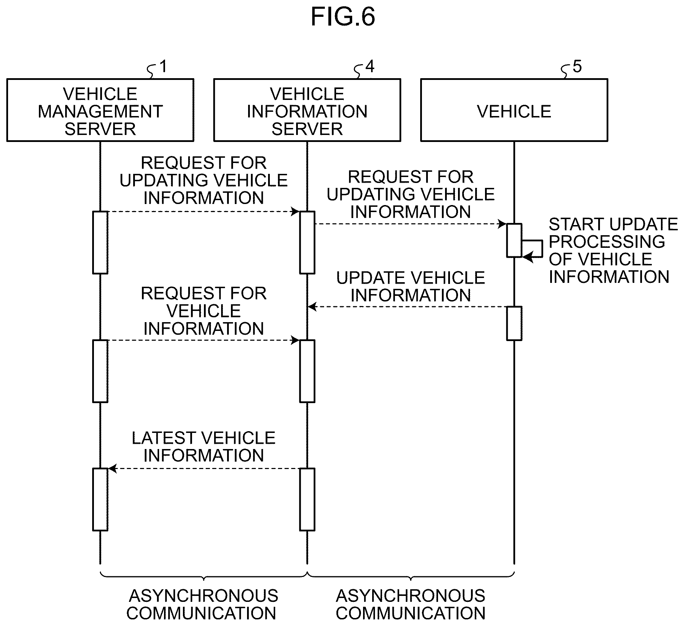

The first example of the exchange of the information among the vehicle management server 1, the vehicle information server 4, and the vehicle 5 will be described with reference to FIG. 6.

A case where the vehicle management server 1, the user terminal 2, the business terminal 3, the vehicle information server 4, and the vehicle 5 are connected to the public line network (such as the mobile phone network) will be described in the following description. In this case, asynchronous communication is performed among the vehicle management server 1, the user terminal 2, the business terminal 3, the vehicle information server 4, and the vehicle 5. Note that an arrow line indicating the asynchronous communication is indicated by a broken line in FIG. 6.

In the present example, since the network N includes the public line network, for example, it is assumed that the vehicle 5 is used for a purpose such as car sharing or a car rental. In addition, in the present example, since the network N is constructed by a general public line network, there is an advantage that system construction is easy as compared with a case where the WAN is included in a part of the network N.

The control unit 11 of the vehicle management server 1 transmits a request for updating the vehicle information to the vehicle information server 4 in a constant period, for example. In this case, the control unit 41 of the vehicle information server 4 transfers the received request for the vehicle information update to the vehicle 5. In response to this, the vehicle 5 performs update processing of the vehicle information. The "update processing of the vehicle information" indicates that the latest vehicle information is acquired through, for example, various sensors mounted on the vehicle 5. Subsequently, the vehicle 5 transmits the updated vehicle information to the vehicle information server 4 in order to update the vehicle information on the vehicle information server 4. In response to this, the control unit 41 stores the received vehicle information in the vehicle information DB 42.

For example, when the user uses the vehicle 5, the control unit 11 transmits the request for the vehicle information to the vehicle information server 4 at predetermined determination timing. Subsequently, the control unit 41 transmits the latest vehicle information to the vehicle management server 1 in order to update the vehicle information on the vehicle management server 1. In response to this, the control unit 11 stores the received vehicle information in the vehicle management DB 12.

### (Exchange of information among the vehicle management server, the vehicle information server, and the vehicle (second example))

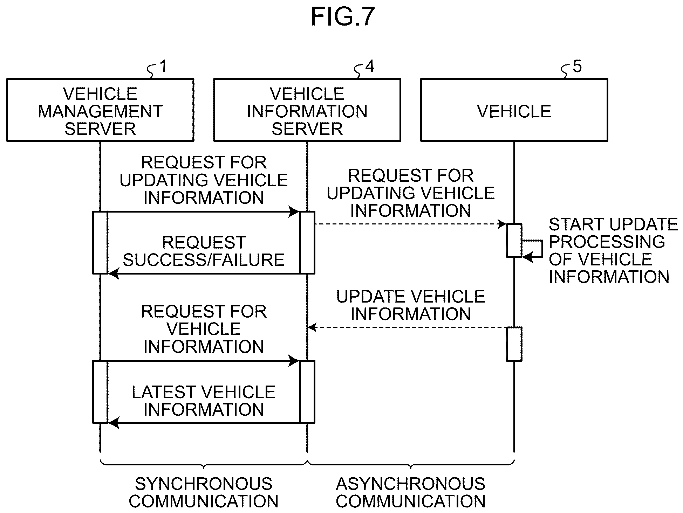

The second example of the exchange of the information among the vehicle management server 1, the vehicle information server 4, and the vehicle 5 will be described with reference to FIG. 7.

A case where the vehicle management server 1, the user terminal 2, and the business terminal 3 are connected by the WAN and the vehicle information server 4 and the vehicle 5 are connected by the public line network (such as the mobile phone network) will be described in the following description. In this case, asynchronous communication is performed between the vehicle information server 4 and the vehicle 5, and synchronous communication is performed between the others. Note that an arrow line indicating the asynchronous communication is indicated by a broken line and an arrow line indicating the synchronous communication is indicated by a solid line in FIG. 7.

In the present example, since a part of the network N includes the WAN, for example, it is assumed that the vehicle 5 is used for a purpose such as a corporate fleet vehicle. Furthermore, in the present example, since the vehicle management server 1 and the vehicle information server 4 are connected by the WAN, synchronous communication (bidirectional communication) is performed between the two. Thus, as compared with a case where asynchronous communication is performed between the two, there are advantages that success or failure at the time of information transmission is immediately determined and a response to a request for information is fast, for example.

The control unit 11 transmits a request for updating the vehicle information to the vehicle information server 4 in a constant period, for example. In response to this, the control unit 41 transfers the received request for updating the vehicle information to the vehicle 5. In response to this, the vehicle 5 performs update processing of the vehicle information.

Subsequently, the control unit 41 transmits information related to success/failure of the request for updating the vehicle information to the vehicle management server 1. The "information related to the success of the request for updating the vehicle information" is transmitted from the control unit 41 to the vehicle management server 1, for example, in a case where the request for updating the vehicle information is normally received on a side of the vehicle 5 and the update processing of the vehicle information is started on the side of the vehicle 5. On the other hand, the "information related to the failure of the request for updating the vehicle information" is transmitted from the control unit 41 to the vehicle management server 1, for example, in a case where the request for updating the vehicle information is not normally received on the side of the vehicle 5 due to communication failure or the like and the update processing of the vehicle information is not started on the side of the vehicle 5. Note that in a case where the request for updating the vehicle information is failure, the control unit 11 may transmit the request for updating the vehicle information to the vehicle information server 4 again.

Subsequently, the vehicle 5 transmits the updated vehicle information to the vehicle information server 4 in order to update the vehicle information on the vehicle information server 4. In response to this, the control unit 41 stores the received vehicle information in the vehicle information DB 42.

For example, when the user uses the vehicle 5, the control unit 11 transmits a request for the vehicle information to the vehicle information server 4 at predetermined determination timing. Subsequently, the control unit 41 transmits the latest vehicle information to the vehicle management server 1. In response to this, the control unit 11 stores the received vehicle information in the vehicle management DB 12.

The vehicle management device according to the embodiment described above can reduce the risk that the vehicle 5 is not returned by determining whether the lent or shared vehicle 5 can be returned.

Further effects and modification examples can be easily derived by those skilled in the art. Thus, broader aspects of the present invention are not limited by the specific details and representative embodiments that are illustrated and described in the above manner. Thus, various modifications can be made without departing from the sprit or scope of a general concept of the invention defined by the accompanying claims and an equivalent thereof.

For example, although the description has been made on the assumption that the vehicle management server 1 functions as the vehicle management device in the present embodiment, the vehicle 5 itself may function as the vehicle management device. In this case, the vehicle 5 may have functions of the control unit 11, the vehicle management DB 12, the station management DB 13, the reservation management DB 14, the map information DB 15, and the display device 17 of the vehicle management server 1. Furthermore, in the vehicle management device according to the embodiment, the vehicle 5 may perform a part of the processing of the vehicle management server 1 and the vehicle information server 4.

In addition, in the present embodiment, the vehicle management server 1, the business terminal 3, and the vehicle information server 4 have been described as separate devices. However, the vehicle management server 1, the business terminal 3, and the vehicle information server 4 may be constituted by one device, two devices, or four or more devices.

## Claims

1. A vehicle management device (1) comprising:
a processor (11) configured to
acquire (S3) position information of a lent or shared vehicle (5), and destination information set in a car navigation system of the vehicle (5), and
determine (S4) whether the vehicle (5) can be returned by predetermined time on a basis of the position information of the vehicle (5), position information of a return station where the vehicle (5) is returned, and the destination information.

2. A vehicle management device (1) comprising:
a processor (11) configured to
acquire (S3) position information of a lent or shared vehicle (5), and
determine (S4) whether the vehicle (5) can be returned by predetermined time on a basis of at least the position information of the vehicle (5) and reservation information of the vehicle (5).

3. The vehicle management device (1) according to claim 2, wherein
the processor (11) is configured to
determine (S4) whether the vehicle (5) can be returned by predetermined time further on a basis of position information of a return station where the vehicle (5) is returned, and
the position information of the return station is included in the reservation information or specified on a basis of the reservation information.

4. The vehicle management device (1) according to any one of claims 2 or 3, wherein
the reservation information includes reservation start time and reservation end time of the vehicle (5), and
the processor (11) is configured to
calculate required time from a current position of the vehicle (5) to a return station where the vehicle (5) is returned on a basis of the position information of the vehicle (5) and position information of the return station, and
determine (S4) whether the return by the reservation end time of the vehicle (5), which time is the predetermined time, is possible on a basis of the required time, current time, and the reservation end time of the vehicle (5).

5. The vehicle management device (1) according to any one of claims 2 or 3, wherein
the reservation information includes, with respect to the vehicle (5), reservation start time and reservation end time related to first reservation and reservation start time and reservation end time related to second reservation subsequent to the first reservation, and
the processor (11) is configured to
calculate required time from a current position of the vehicle (5) to a return station where the vehicle (5) is returned on a basis of the position information of the vehicle (5) and position information of the return station, and
determine whether the return by the reservation start time of the vehicle (5) in the second reservation, which time is the predetermined time, is possible on a basis of the required time, current time, and the reservation start time of the second reservation.

6. The vehicle management device (1) according to claim 4 or claim 5, wherein the processor (11) is configured to acquire (S3) the position information of the vehicle (5) and determine (S4) whether the return is possible on a basis of elapsed time with respect to a reservation period from the reservation start time to the reservation end time of the vehicle (5).

7. The vehicle management device (1) according to any one of claims 2 or 3, wherein
the processor (11) is configured to
calculate a distance from a current position of the vehicle (5) to a position of a return station where the vehicle (5) is returned on a basis of the position information of the vehicle (5) and position information of the return station,
calculate required time from the current position of the vehicle (5) to the return station on a basis of the distance and a speed of the vehicle (5), and
determine (S4) whether the return by reservation end time of the vehicle (5), which time is the predetermined time, is possible on a basis of the required time, current time, and the reservation information.

8. The vehicle management device (1) according to any one of claims 2 or 3, wherein
the processor (11) is configured to
calculate a Euclidean distance from a current position of the vehicle (5) to a return station where the vehicle (5) is returned on a basis of latitude/longitude information indicating the position of the vehicle (5) and latitude/longitude information indicating a position of the return station,
calculate required time from the current position of the vehicle (5) to the return station on a basis of the Euclidean distance and a speed of the vehicle (5), and
determine whether the return by reservation end time of the vehicle (5), which time is the predetermined time, is possible on a basis of the required time, current time, and the reservation information.

9. The vehicle management device (1) according to any one of claims 2 or 3, wherein
the processor (11) is configured to
acquire road information,
calculate required time from a current position of the vehicle (5) to a return station where the vehicle (5) is returned on a basis of the position information of the vehicle (5), position information of the return station, and the road information, and
determine whether the return by reservation end time of the vehicle (5), which time is the predetermined time, is possible on a basis of the required time, current time, and the reservation information.

10. The vehicle management device (1) according to claim 2, wherein
the processor (11) is configured to
acquire destination information of the vehicle (5), calculate required time from a current position of the vehicle (5) to a return station where the vehicle (5) is returned on a basis of the position information of the vehicle (5), position information of the return station, and the destination information, and
determines (S4) whether the return by the reservation end time of the vehicle (5), which time is the predetermined time, is possible on a basis of the required time, current time, and the reservation information.

11. The vehicle management device (11) according to any one of claims 2 to 10, wherein
the processor (11) is configured to output information related to a result of the determination whether the return is possible to a business terminal (3) owned by a business manager that performs lending operation or sharing operation of the vehicle (5), and display the information related to the result of the determination whether the return is possible on a display (33) of the business terminal (3).
